# EUROPEAN PATENT SPECIFICATION

(11) **EP 1 258 406 B1**
(45) Date of publication and mention of the grant of the patent: **13.12.2006**
(21) Application number: 02011097.9
(22) Date of filing: 17.05.2002
(51) Int. Cl.: B60T 8/00, B60G 17/015

(54) **Vehicle equipped with towing means and anti-skid control system**
Fahrzeug mit Zugmittel und Antiblockierbremssystem ausgerüstet
Véhicule équipé de moyen de traction et d'un système d'antiblocage des freins

(30) Priority: 18.05.2001 GB 0112099
(43) Date of publication of application: 20.11.2002
(73) Proprietor: JCB Landpower Ltd, Cheadle,Staffordshire ST10 2JX (GB)
(72) Inventor: Clay, Raymond, Congleton, Cheshire CV12 4HN (GB); Pettifor, Ian Michael, Staffordshire, ST18 9JY (GB); Heelis, David John, Staffordshire, ST21 6DS (GB); Mould, Ian Kipling, Staffordshire, ST14 8TQ (GB)
(74) Representative: Lally, William

(56) References cited:
- WO-A-97/14592
- WO-A-98/41429
- DE-A- 19 522 632
- GB-A- 2 307 526
- US-A- 2 817 542
- US-A- 3 814 464

## Description

This invention relates to a vehicle, hereinafter referred to as being of the kind specified, including a chassis, a front axle means and a rear axle means suspended from the chassis by rear axle suspension means, and there being a towing means secured to the rear axle means by which an implement may be towed (WO 92/02381).

In order that a vehicle of the kind specified can operate off road it is conventionally provided with wheels and tyres of relatively large size and usually of the same size on all four wheels.

For example, the tyres typically fit wheel rims of 24 inch to 44 inch diameter and have tyre width of, for example, 9.5 inches to 1050mm. Such wheel and tyre combinations are of a relatively high inertia.

It is desirable that a vehicle of the kind specified may be driven both off and on road at a relatively high speed and an object of the present invention is to facilitate this with enhanced safety.

WO98/41429 discloses a vehicle braking responsive to wheel skid signals from at least two wheel speed sensors, for sensing speed conditions of at least two wheels and for generating skid control instructions.

According to the present invention we provide a vehicle comprising a chassis, a front axle means and a rear axle means and a plurality of wheels, wherein each wheel of the vehicle is provided with a wheel sensor; there is a controller responsive to wheel speed signals from said wheel speed sensors, for sensing skid conditions at said wheels and for generating skid control instructions, a wheel brake for each wheel, responsive to fluid pressure, hereinafter referred to as brake pressure, supplied thereto, from a fluid pressure supply in accordance with a brake demand signal and a skid control device controlled by said skid control instructions for modulating the brake demand signal to provide the brake pressure, characterised in that the vehicle includes a towing means secured to the rear axle means by which an implement may be towed and wherein the rear axle means is suspended from the chassis by rear axle suspension means, the rear axle suspension means comprising a non-reactive suspension.

The skid control device may be controlled by the skid control instructions for controlling the brake pressure in a plurality of cycles each of which comprises a pressure reduction phase and a pressure increase phase and a cycle may also comprise a pressure hold phase between the pressure reduction phase and the pressure increase phase.

The pressure increase phase may be performed in plurality of steps of pressure increase separated by intervals of constant pressure.

A skid control device may be provided independently to modulate the brake demand signal for each brake of the rear axle means.

A common skid control device may be provided to supply a common modulated brake demand signal to each brake of the front axle means.

Alternatively, a skid control device may be provided independently to modulate the brake demand signal for each brake of the front axle means.

At least one of the brakes may be a hydraulic brake which is provided with hydraulic brake pressure by a hydraulic/pneumatic actuator which is supplied with pneumatic brake pressure from a skid control device.

It has been found, surprisingly, and contrary to the opinion of one skilled in the art that a vehicle of the kind specified is able to perform anti-skid braking although it is provided with relatively high inertia wheels and such wheels have been found to respond adequately quickly to the changes in brake regulation demanded by said modulating means.

The front axle means may be suspended from the chassis by a non-reactive suspension.

Throughout this specification the term "chassis" is intended to mean both a frame type to which body panels are attached and which carries a vehicle engine and other vehicle components thereon, and a chassis which is of the body shell type in which the vehicle engine and other components are carried.

By the suspension means being "non-reactive", we mean that the vertical load on the respective ground wheels and the ground, does not significantly fluctuate in response to changes in the driving torque applied to the ground wheels.

For example, in one form of non-reactive suspension, the front and/or rear axle suspension means may comprise a pair of links at either side of the vehicle, one link of each pair being above the other relative to the ground, the links of each pair being connected at their one ends to the chassis and at their other ends to the or the respective axle means whereby there is no significant change in the vertical loading on the drive wheels in response to changes in the driving torque applied to the ground wheels. Using such a non-reactive suspension, the traction between the ground wheels and the ground, remains high as the vehicle traverses irregularities of the ground, because vertical movement of the axle, in response to irregularities in the ground, is not transmitted to the chassis.

In another type of non-reactive suspension, one upper link is provided on each side of the vehicle, between the axle and the chassis, and a single lower link is provided between but below said upper links, and a Panhard rod extends transversely to the three links between the axle means and the chassis.

The implement the vehicle is adapted to tow, may be, for example, a plough, harrow, or any other agricultural implement, or a trailer with wheels.

The invention will now be described with reference to the accompanying drawings in which:

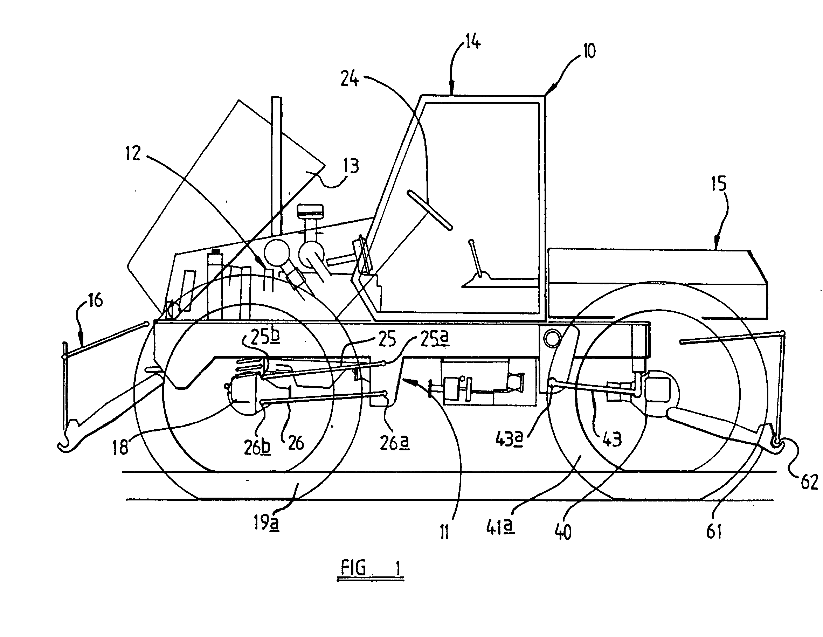

Figure 1 is a side illustrative view of a vehicle in accordance with the invention,

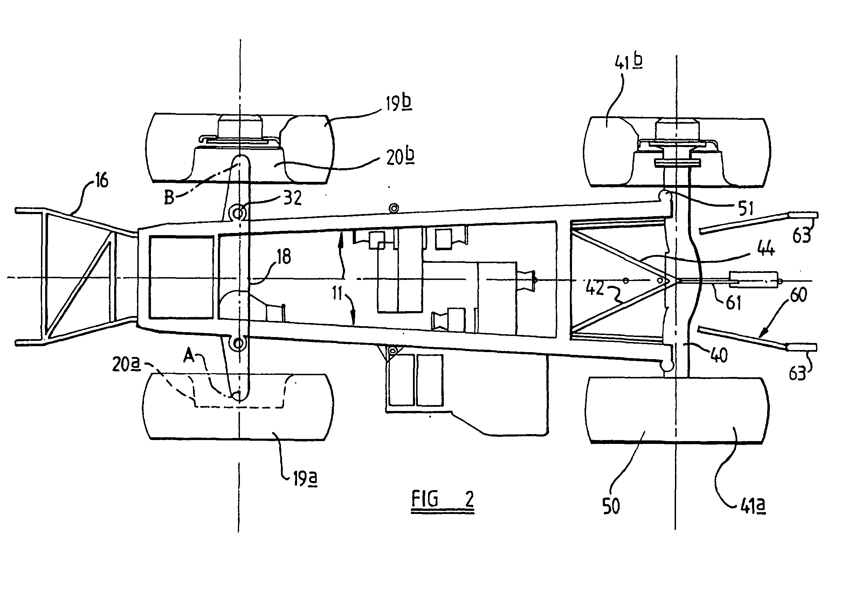

Figure 2 is a plan view of the vehicle of Figure 1, again shown diagrammatically,
Figure 3 is an illustrative perspective view of part of the front end of the vehicle of Figures 1 and 2 with various components omitted for clarity,

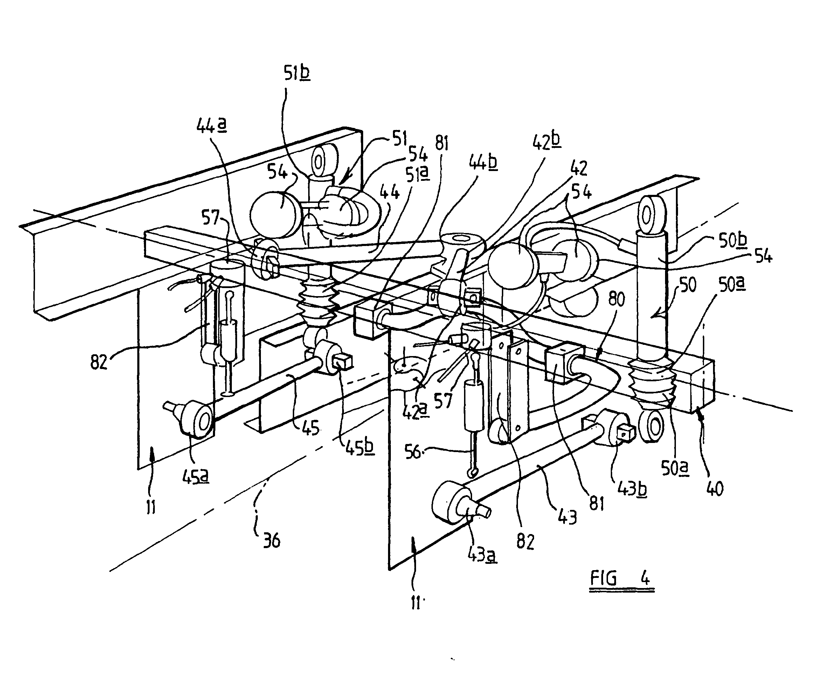

Figure 4 is an illustrative perspective view of part of the rear end of the vehicle of Figures 1 and 2 with various components omitted for clarity, and
Figure 5 is an illustrative perspective view of a three point tractor linkage secured to a rear axle means of the vehicle of Figures 1 to 4 with parts omitted for clarity.
Figure 6 is a fragmentary diagrammatic cross section with parts omitted of a front wheel of the vehicle of Figure 1,
Figure 7 is a fragmentary perspective view of the wheel of Figure 6,
Figure 8 is a fragmentary view similar to Figure 6 but of a rear wheel,
Figure 9 is a fragmentary view similar to Figure 7 of a rear of the vehicle,
Figure 10 is a diagrammatic circuit diagram of a fluid pressure brake system embodying the invention, and
Figure 10a is a circuit diagram similar to Figure 10 but showing a modification.

Referring to the drawings, a vehicle 10 comprises a frame type of chassis 11 on which an engine 12 is mounted beneath a bonnet 13, a cab 14 for an operator or driver of the vehicle, and a load platform 15 on which in use, loads may be carried is provided.

Attached to a front of the chassis 11 is a towing/pushing/lifting assembly 16 which may be of the conventional three point hitch type or any other type of towing hitch assembly as may be desired.

The hitch assembly 16 is only intended for relatively light work for example in shunting trailers or lifting lighter implements.

Suspended from the chassis 11 is a front axle 18 which carries a pair of front ground engaging wheels 19a, 19b, one at each end.

The wheels 19a, 19b are mounted on respective hubs 20a, 20b which are pivotable about axes A, B, respectively in mountings 21a, 21b at the respective ends of the front axle 18, in response to movement of steering rods (not shown) which are connected to a steering box 23 and to the hubs 20a, 20b. The hubs 20a, 20b may otherwise be interconnected by a further rod (not shown) whereby the wheels 19a, 19b are pivoted in generally parallel fashion by operation of a steering wheel 24 which is located in cab 14 and controls operation of the steering box 23.

Drive may be transmitted to the front wheels 19a, 19b from the engine 12 through the axle 18 as is well known in the art.

The front wheels 19a, 19b are each provided with a wheel brake 119a, 119b to be described in more detail hereinafter.

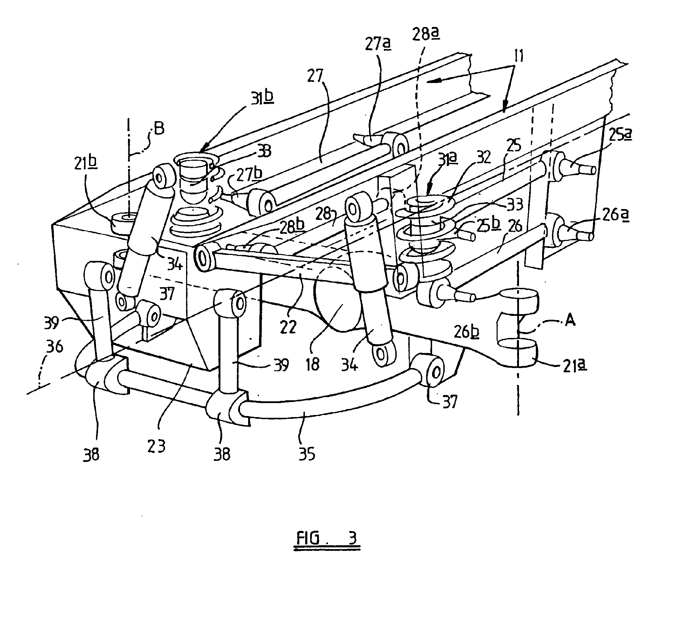

The front axle 18 is connected to the chassis 11 by means of three links, 25, 26 and 27. Two upper links 25 and 26, one on each side of the vehicle centre line, and one lower link 27, on the vehicle centre line. Each of the suspension links 25 to 27 are secured to the chassis 11 at their one ends 25a-27a by plastic or rubber ball joints, and at their other ends 25b-27b by further plastic or rubber ball joints to extension parts of to the front axle 18, not seen in Figure 3.

The two upper links 25 and 26 are generally in a parallel plane to the lower link 27.

By virtue of the three suspension links 25 to 27, and a Panhard rod 22 a non-reactive suspension is provided for the front axle 18 in which changes in vertical loading on the ground wheels 19a and 19b, and hence loss of traction between the wheels 19a, 19b and the ground 30 is minimised both as the wheels 19a, 19b and hence the front axle 18 move relative to the chassis 11 as the vehicle 10 is travelling over the ground 30, and in response to changes in drive torque transmitted to the ground wheels 19a, 19b.

Coil springs 31a, 31b interconnect the front axle 18 and the chassis 11, the coil springs 31a, 31b each being of the type which comprise a main coil spring 32 which is relatively yielding at low loads and an auxiliary spring 33 which in this instance comprises a cushion of micro-cellular rubber which is equally stiff for all values of the load so that the coil springs 31a, 31b become increasingly stiff with increasing load i.e. as the distance between the axle 18 and the chassis 11 at either respective side of the vehicle 10 decreases. A third suspension stage is provided by a rubber spring which supplements the primary coil spring and the secondary micro-cellular rubber spring. If desired gas springs may be used instead of coil springs.

A pair of shock absorbers 34 of conventional construction are also provided between the chassis 11 and the axle 18 to damp the oscillation of the axle 18.

An anti-roll bar 35 is provided, connected to the chassis 11 and the axle means 18, to provide resistance to movement of either side of the vehicle at the front, about a roll axis 36, the roll bar 35 being received by first mountings 37 of the axle 18 and second mountings 38 connected rigidly via links 39 to the chassis 11.

Suspended from the chassis 11 at the rear of the vehicle is a rear axle 40 which carries a pair of rear ground engaging wheels 41a, 41b via two pairs of suspension links 42, 43, and 44, 45, mounted at either side of the vehicle 10 with one link 42, 44 of each pair above the other link 43, 45 of each pair.

The one ends 42a-45a of the links 42-45 are connected by plastic or rubber ball joints to the chassis 11 and the other ends 43b-45b of links 43, 45 are also connected via respective plastic or rubber ball joints to extensions to the rear axle 40. The other ends 42b, 44b of links 42, 44, are interconnected and coupled to a common point at an extension of axle 40 via a plastic or rubber ball joint to provide a V formation in plan view, with the apex of the V pointing towards the rear end of the vehicle 10.

Power may be transmitted to the rear wheels 41a, 41b, from the engine 12 through the axle 40 as is well known in the art. In the present example both the front and the rear wheels are driven from the engine 12 via a differential provided on each axle as is well known in the art.

The rear wheels 41a, 41b are each provided with a wheel brake 141a, 141b to be described in more detail hereinafter.

A hydraulic strut 50, 51 is provided at either side of the vehicle and the struts 50, 51 interconnect the axle 40 to the chassis 11. The hydraulic struts 50, 51, comprises a piston, connected to the axle 40, the pistons sliding in and out of cylinders 50b, 51b such that as the distance between the chassis 11 axle 40 decreases, hydraulic fluid is ejected from one or both of the actuators 50, 51, depending on which of the ground engaging wheels 41a, 41b has lifted due to irregularities in the ground 30.

However, the struts 50, 51, each incorporate a pair of gas springs 54 each of which contains a diaphragm so that fluid ejected from the cylinders 50b, 51b, acts on one side of the diaphragm, the other sides of the diaphragms being subjected to pneumatic pressure by gas contained within the springs 54.

Thus as the wheels 41a, 41b rise and fall due to e.g. irregularities in the ground, the gas springs 54 provide a cushioning effect. If desired the gas spring spheres may be mounted directly onto the hydraulic struts 50, 51.

However, the amount of fluid in the cylinders 50a, 50b is increased and decreased depending on a height regulator means including a linkage 56 which is secured at each side of the vehicle between the link 43 or 45 and the chassis 11.

The linkages 56 each comprises a piston and cylinder arrangement, constructed so that as the links 43 for example moves as the load on the axle 40 increases, the respective linkage 56 operates on a valve 57 which allows more hydraulic fluid supplied from a pump (not shown) to be fed into the cylinders 50b, 51b to extend the respective piston back to a datum position. Conversely, when the load on axle 40 decreases, the link 43 will move so as to extend linkage 56 which operates valve 57 to allow hydraulic fluid to leave the respective cylinders 50b, 51b so that the respective pistons are retracted back to a datum position. Hence the amount of hydraulic fluid in the respective cylinders 50b and 51b will change to extend or retract the pistons, so that the suspension will be self levelling.

Preferably, a damper means is provided within the valve 57 so that the self levelling function of the suspension does not react to sudden movements of the linkages 43, 45, as the vehicle is travelling, but only reacts, for example 6-10 seconds, after a constant change in payload which causes changes in the distance between the chassis 11 and the axle 40.

The rear suspension arrangement includes an anti-roll bar 80 which is secured via mountings 81 to the rear axle, and through rigid links 82 to the chassis 11, the bar 80 providing resistance to the rear end of the vehicle rolling about axis 36.

Also attached to the rear axle 40 is a pulling/lifting assembly 60 comprising a three point linkage having a pair of swinging arms 61 pivotally mounted on mountings M1 of the axle 40, which arms 61 are each provided with a hook 62 adapted to be engaged with an implement to be pulled. The linkage 60 further comprises a top link 63 also intended to be coupled to an implement to be pulled, the position of attachment of the top link 63 to the axle 40 being adjustable by means of a multi position mounting M2.

The hitch 60 further comprises a pair of control arms 65 which are pivotally mounted on a rocker shaft and headstock casing assembly 66 which is fixed relative to the mounting M2. Links 68 extend between the control arms 65 and the outer ends of the swinging arms 61, and lift cylinders 69 otherwise couple the control arms 65 to the swinging arms 61.

The primary purpose of the lift cylinders is to lift the hitch 60 but they also provide damping which is desirable.

Thus the swinging arms 61 can move up and down relative to the axle 40, in a controlled, damped manner. The primary purpose at the lift cylinders is to lift, but they do also provide damping which is desirable.

Lateral stabilisers 70 also connect the axle 40 to the swinging arms 61 to give rigidity or at least controlled float, in a lateral direction.

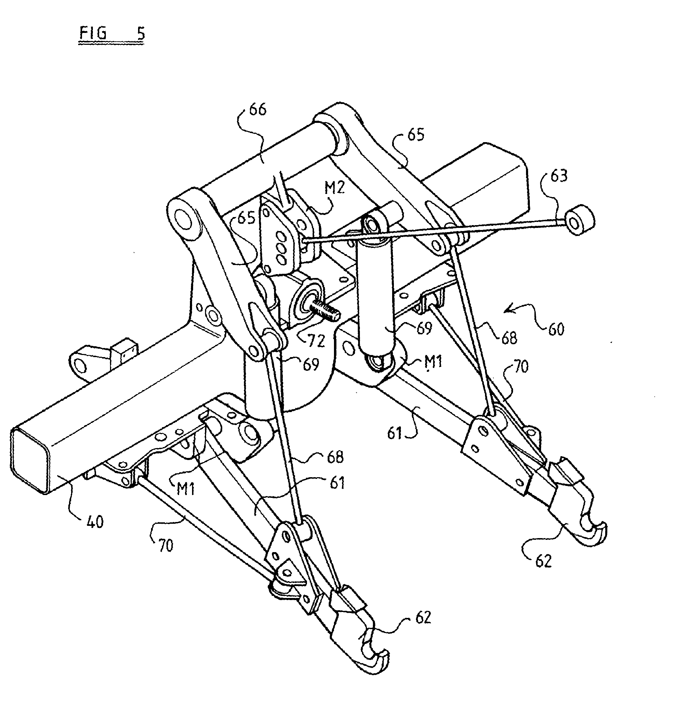

In the example shown in Figure 5, the towing hitch 60 includes a power take off 72 to enable drive to be transmitted to the appropriate machinery being pulled or carried.

The rear axle 40 suspension is thus also of the non-reactive type by virtue of the four links 42 to 45 and is self levelling by virtue of the hydropneumatic springing system used.

The front wheels 19a, 19b are carried on hubs 20a, 20b. Each hub is rotatably mounted by a pair of tapered roller bearings 122 on a stub shaft assembly 123 provided with a pair of trunnions 124 connected to the mountings 21a, 21b hereinbefore described so as to be pivotable about the pivot axes A, B.

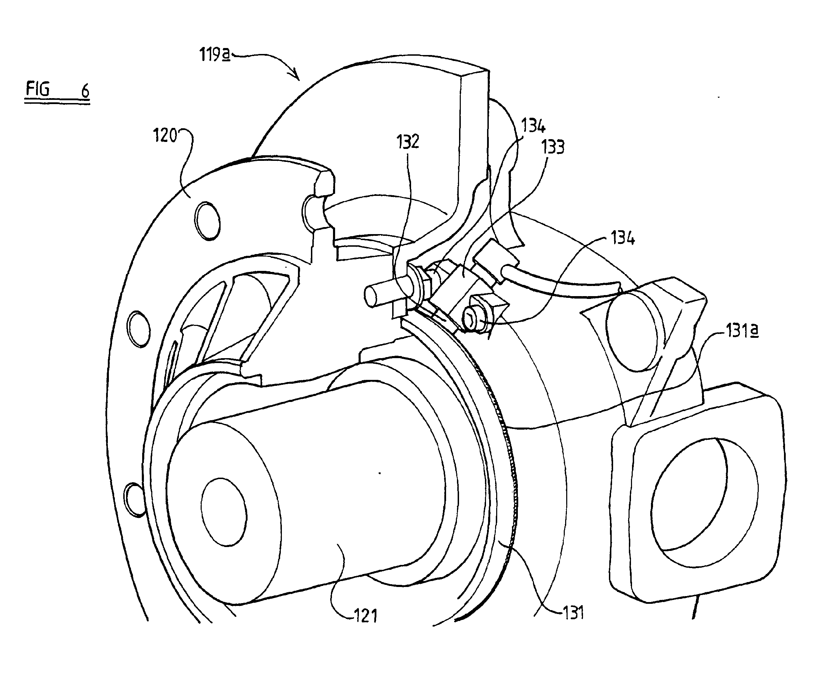

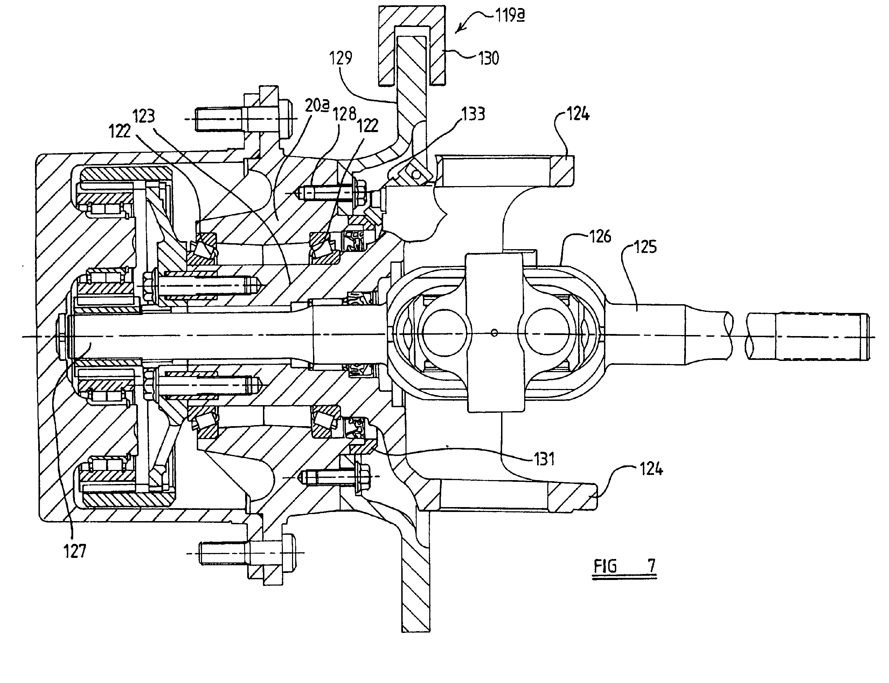

Drive from the differential of the axle 18 is transmitted via a shaft 125, a cardan joint 126 and drive shaft 127 which is fastened to the hub 20a or 20b. Although in Figures 6 and 7 only the hub assembly at the left hand end of the axle 18 is illustrated it should be appreciated that the hub assembly, drive arrangements and pivot arrangements for steering at the opposite end of the axle 18 are the same and have only the left hand is described in detail herein.

Connected to the hub 20a by a plurality of spaced bolts 128 is a brake disk 128 which is provided with a conventional brake calliper 130 bolted to the hub assembly 123.

Fastened to the hub 20a is a pole wheel 131 having a plurality of teeth 131a. A wheel speed sensor 132 is carried by a sensor block 133 which is connected by bolts 134 to the stub shaft assembly 134.

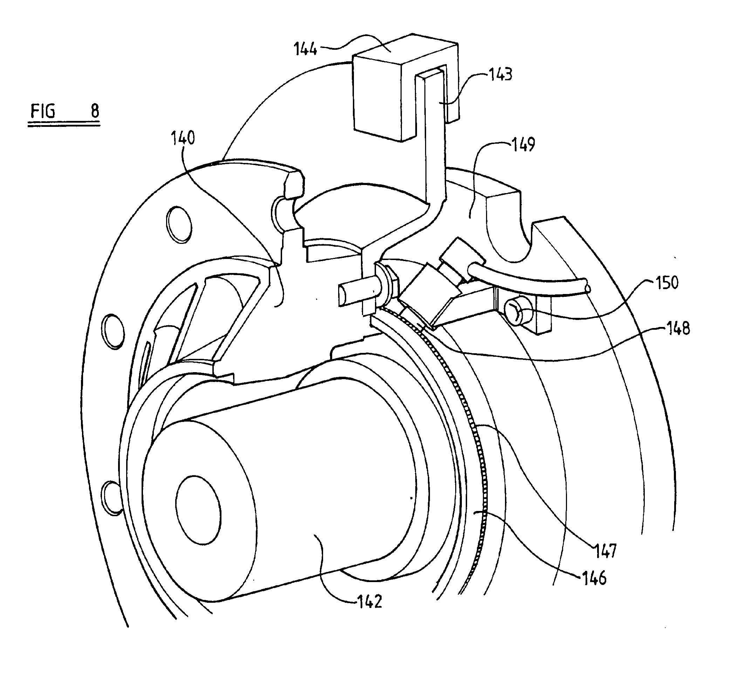

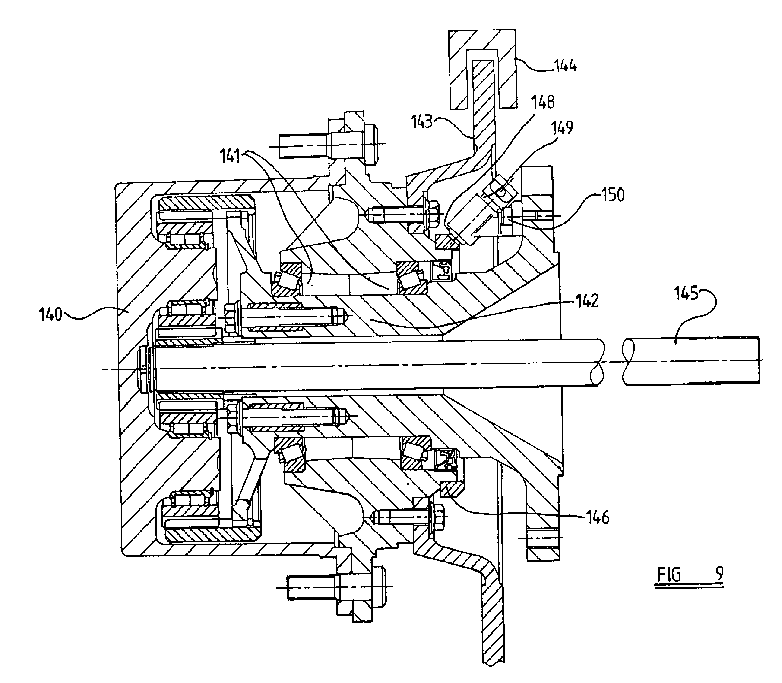

Referring now to Figures 8 and 9 there is illustrated the left hand end looking forward mounting arrangement for the rear wheel 41a. Like the front wheel 19a it is carried on a hub 140 which is rotatably mounted by a pair of taper roller bearings 141 on a stub shaft assembly 142 which in this case is bolted to the end of the axle 40. Bolted to the hub 140 is a brake disc 143 which is operatively associated with a brake calliper 144 which is fixed relative to the stub shaft assembly 142. The hub 140 is rotatably driven by a shaft 145 which extends from one side of the differential disposed in the axle 40.

Mounted on the hub 140 is another pole wheel 146 provided with a plurality of teeth 147 around its periphery.

A wheel speed sensor 148 is carried in a sensor block 149 which is fixed by screws 150 to the stub shaft assembly 142.

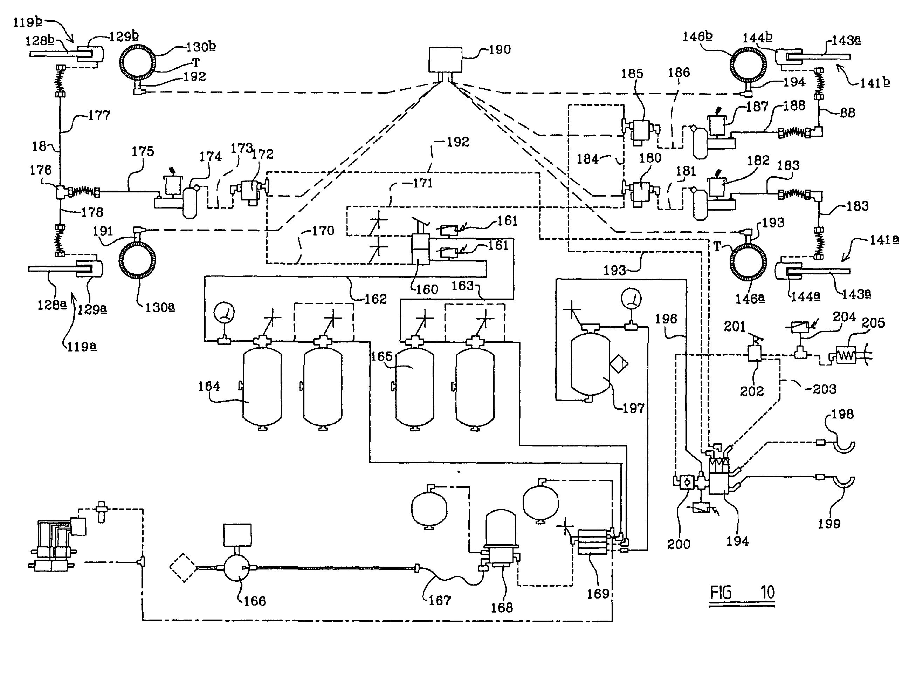

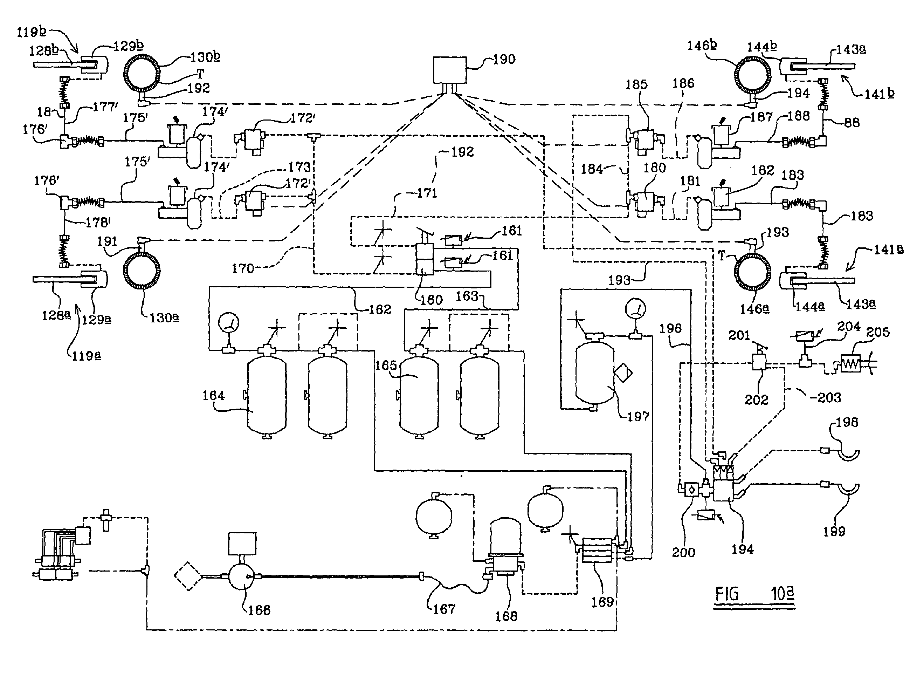

Referring now to Figure 10, a braking circuit is illustrated diagrammatically and comprises a pneumatic foot operated valve 160 which is operable by the driver of the vehicle. Air under pressure is fed to the valve 160 via low pressure switches 161 on lines 162 and 163 respectively from air reservoirs 164, 165 respectively for the front and rear brakes. Air is supplied to the reservoirs 164, 165 from a compressor 166 on a line 167 via an air valve 168 and a circuit protection valve 169.

Air in the form of a brake demand signal is supplied from the foot valve 160 towards the front axle 18 on a line 170 and towards the rear axle 40 on a line 171.

The air demand signal in the line 170 is fed to a skid control device comprising a solenoid operable pressure modulating valve 172 where the demand signal pressure in the line 170 may be modulated, as hereinafter to be described. The air fed from the valve 172 which may or may not be modulated is a brake pressure.

The pneumatic brake pressure is fed on the line 173 to an air/hydraulic actuator 174 of conventional type where the brake pressure 173 is converted to a corresponding hydraulic pressure supplied in the line 175 to a connection 176 which supplies hydraulic pressure on line 177 and 178 to the pistons of the callipers 129a, 129b to provide braking action to the brake discs 128 associated with the left and right front wheels 19a, 19b respectively.

The brake demand supplied on the line 171 towards the axle 40 is fed via a first skid control device comprising a first solenoid operated pressure modulating valve 180 and then on line 181 to a further air/hydraulic actuator 182 and the hydraulic pressure corresponding to the brake pressure in the line 181 is fed on line 183 to the brake calliper 144a to act on the brake disc 143a.

The line 171 also extends, via line 184, to a second skid control device comprising a second solenoid operated pressure modulating valve 185. The resulting pneumatic brake pressure is fed on a line 186 to a third air/hydraulic actuator 187 from which hydraulic pressure corresponding to the pneumatic brake pressure in the line 186 is fed on a line 188 to a calliper 144b to act on a disc 143a of the right hand rear wheel.

The speed of the left and right hand front wheels and of the left and right hand rear wheels are determined by an ECU 190 in response to electrical signals supplied by wheel speed sensors 191, 192, 193, 194 resulting from sensing the passage of teeth T of the pole wheels or sensing rings 130a, 130b, 146a, 146b. Of course normally no modulation is required by the valves 172, 180 and 185 and the brake demand signal from the foot valve 160 is the same as the pneumatic brake pressure.

However, when the ECU detects a need to apply brake control then, in accordance with a suitable algorithm well known to those skilled in the art the ECU sends a signal to the skid control devices 172, 180, 185 as necessary so as to restrain the wheels or wheel of the front and/or rear axle from skidding when the ECU 190 detects that one of the wheels of the front axle or rear axle is slowing towards zero rotation or is stopped.

Typically the algorithm may cause the skid control device to control the brake pressure in a plurality of cycles each of which comprise a pressure reduction phase and a pressure increase phase and a cycle may also comprise a pressure hold phase between the pressure reduction phase and the pressure increase phase.

The pressure increase phase may be performed in a plurality of steps of pressure increase operated by intervals of constant pressure.

In the present example there is shown a 4S/3M system. That is to say a system in which there are four sensors, one for each wheel and three skid control devices or modulators, one modulator 172 supplying a common pressure to the wheels 19a, 19b on the front axle and two modulators, one for each of the wheels on the rear axle 40.

In such an arrangement it is usual for the ECU to control the wheels on the front axle 18 on the basis of the wheel detecting the lowest friction and in this case the amount of braking available from the wheel on the higher friction surface is correspondingly reduced.

If desired the system may comprise a 4S/4M system in which case not only the rear axle but also the front axle is provided with two modulators 172', one for each wheel, as illustrated in Figure 10a. In addition, separate lines 175' and air/hydraulic actuator 174' and connections 176' are provided to feed hydraulic pressure on lines 177' and 178' separately to the wheel brakes 119a, 119b.

If desired, as illustrated in Figure 10, air may be supplied from the pressure modulating valves 172 and 185 on lines 192, 193 to a further control valve 194 supplied with air on line 196 from reservoir 197 to which air is supplied from the protection valve 169. Air may also be supplied from the trailer control valve through supply couplings 198, 199 to a trailer and a non-return valve 200 and a line 201 to a hand-control valve 202, to which air is also supplied on line 203 from the trailer control valve 194. Air is fed, from the hand control valve 202 via a low pressure switch 204 to a parking brake actuator 205.

It has been found that the vehicle 10 is well able to travel over a conventional road surface at high speed e.g. at up to 80 kph or more and to brake safely from such speeds without risk of skidding of any of the wheels.

Because of the relative lightness of the vehicle, it may be necessary to add ballast weights at the front of the vehicle to prevent the vehicle tipping about the axes of rotation of the rear wheels 41a, 41b when the vehicle 10 is towing a heavy load such as a plough. However, even with such ballast weights fitted, the vehicle will still be considerably lighter than a conventional tractor wherein sufficient traction between the rear drive wheels and the ground is only achieved by increasing the weight of the tractor overall to an undesirable amount.

Various modifications may be made without departing from the scope of the invention. For example, the chassis 11 shown in the drawings is of the frame type i.e. plurality of body parts 13, 14, the engine 12 and other vehicle components are fitted onto the chassis 11, whereas the chassis 11 could be body shell type chassis in which the various components of the vehicle are secured.

Instead of the multi-link type suspension at the front and rear of the vehicle, any other suitable non-reactive type suspension may be provided.

Particularly for a four wheel drive type of vehicle, it is preferred for the front and rear axle suspension means to be of the non-reactive type. Where only the rear wheels are driven an entirely different front suspension for the front axle, may be provided as desired, even a reactive suspension.

A vehicle in accordance with a first aspect of the invention need not have the self levelling spring means at the rear of the vehicle as described, but any other non-reactive type of suspension for the rear axle 40 of the vehicle may be provided.

In the vehicle shown in the drawings, the ground wheels 19a, 19b, 41a, 41b, are all of approximately the same size. Bigger ground wheels may be provided at the rear of the vehicle if desired.

In the present example the wheels have a rim diameter of 30", a tyre width of 480 mm, an aspect ratio R of 70% but the rim diameter may lie in the range 24" mm to 44", tyre width in the range 9.5 mm to 1050 mm and the aspect ratio in the range 30% mm to 100% mm

In the present specification "comprise" means "includes or consists of" and "comprising" means "including or consisting of".

## Claims

1. A vehicle (10) comprising a chassis (12), a front axle means (18) and a rear axle means (40) and a plurality of wheels (19a, 19b, 41a, 41b), wherein each wheel (19a, 19b, 41a, 41b) of the vehicle (10) is provided with a wheel sensor (191, 192, 193, 194), there is a controller (190) responsive to wheel speed signals from said wheel speed sensors (191, 192, 193, 194), for sensing skid conditions at said wheels (19a, 19b, 41a, 41b) and for generating skid control instructions, a wheel brake for each wheel (19a, 19b, 41a, 41b), responsive to fluid pressure, hereinafter referred to as brake pressure, supplied thereto, from a fluid pressure supply in accordance with a brake demand signal and a skid control device (172, 180, 185) controlled by said skid control instructions for modulating the brake demand signal to provide the brake pressure, **characterised in that** the vehicle (10) includes a towing means (60) secured to the rear axle means (40) by which an implement may be towed and wherein the rear axle means (40) is suspended from the chassis (12) by rear axle suspension means (42, 43, 44, 45), the rear axle suspension means comprising a non-reactive suspension.

2. A vehicle according to claim 1 wherein the skid control device (172, 180, 185) is controlled by the skid control instructions for controlling the brake pressure in a plurality of cycles each of which comprises a pressure reduction phase and a pressure increase phase and a cycle may also comprise a pressure hold phase between the pressure reduction phase and the pressure increase phase.

3. A vehicle according to claim 2 wherein the pressure increase phase is performed in a plurality of steps of pressure increase separated by intervals of constant pressure.

4. A vehicle according to any of the preceding claims wherein a skid control device (172, 180, 185) is provided independently to modulate the brake demand signal for each brake (141a, 141b) of the rear axle means (40).

5. A vehicle according to any one of the preceding claims wherein a common skid control device (172) is provided to supply a common modulated brake demand signal to each brake (128, 130) of the front axle means (18).

6. A vehicle according to any one of claims 1 to 4 wherein a skid control device (172, 180, 185) is provided independently to modulate the brake demand signal for each brake (128, 130) of the front axle means (18).

7. A vehicle according to any one of the preceding claims wherein at least one of the brakes (128, 130, 141a, 141b) is a hydraulic brake which is provided with hydraulic brake pressure by a hydraulic/pneumatic actuator which is supplied with pneumatic brake pressure from a skid control device (172, 180, 185).

8. A vehicle according to any one of claims 1 to 7 wherein the front axle means (18) is suspended from the chassis by a non-reactive suspension.

9. A vehicle according to any one of the preceding claims wherein the suspension means comprises a pair of links (42, 43, 44, 45) at either side of the vehicle (10) one link (42, 44) of each pair being above the other (43, 45) relative to the ground, the links (42, 43, 44, 45) of each pair being connected at their one ends to the chassis (12) and at their other ends to the or the respective axle means (40) whereby there is no significant change in the vertical loading on the drive wheels in response to changes in the driving torque applied to the ground wheels (19a, 19b, 41a, 41b).

10. A vehicle according to any one of claims 1 to 8 wherein the suspension means comprises one upper link (25, 26) provided on each side of the vehicle (10), between the axle means (18) and the chassis (12), and a single lower link (27) provided between but below said upper links (25, 26), and a Panhard rod (22) extending transversely to the three links (25, 26, 27) between the axle (18) and the chassis (12).

11. A vehicle according to any one of the preceding claims wherein the implements the vehicle (12) is adapted to tow comprises a plough, harrow, or any other agricultural implement, or a trailer with wheels.

## Patentansprüche

1. Fahrzeug (10) mit einem Fahrgestell (12), einem vorderen Achsenmittel (18) und einem hinteren Achsenmittel (40) und einer Anzahl von Rädern (19a, 19b, 41a, 41b), wobei jedes Rad (19a, 19b, 41a, 41b) des Fahrzeugs (10) mit einem Radsensor (191, 192, 193, 194) versehen ist, wobei eine Steuerung (190) vorhanden ist, die auf Radgeschwindigkeitssignale von den genannten Radgeschwindigkeitssensoren (191, 192, 193, 194) anspricht, zum Erfassen von Gleitzuständen an den genannten Rädern (19a, 19b, 41b, 41b) und zum Erzeugen von Gleitsteuerbefehlen, mit einer Radbremse für jedes Rad (19a, 19b, 41a, 41b), die auf einen Fluiddruck anspricht, auf den nachfolgend als Bremsdruck Bezug genommen wird, der dieser zugeführt wird, von einer Fluiddruckversorgung, in Übereinstimmung mit einem Bremsanforderungssignal, und mit einer Gleitsteuervorrichtung (172, 180, 185), die durch die genannten Gleitsteuerbefehle gesteuert wird, um das Bremsanforderungssignal zu modulieren, um den Bremsdruck bereitzustellen, **dadurch gekennzeichnet, daß** das Fahrzeug (10) ein Schleppmittel (60) aufweist, welches an dem hinteren Achsenmittel (40) befestigt ist, und mit dem ein Gerät geschleppt werden kann, und wobei das hintere Achsenmittel (40) von dem Fahrgestell (12) durch ein Hinterachsen-Aufhängemittel (42, 43, 44, 45) aufgehängt ist, wobei das Hinterachsen-Aufhängemittel eine rückwirkungsfreie Aufhängung umfaßt.

2. Fahrzeug nach Anspruch 1, **dadurch gekennzeichnet, daß** die Gleitsteuervorrichtung (172, 180, 185) durch die Gleitsteuerbefehle zum Steuern des Bremsdrucks in einer Anzahl von Zyklen gesteuert wird, von denen jeder eine Druckverringerungsphase und eine Druckerhöhungsphase umfaßt und ein Zyklus auch eine Druckhaltephase zwischen der Druckverringerungsphase und der Druckerhöhungsphase umfassen kann.

3. Fahrzeug nach Anspruch 2, **dadurch gekennzeichnet, daß** die Druckerhöhungsphase in einer Anzahl von Schritten einer Druckerhöhung durchgeführt wird, die durch Intervalle mit konstantem Druck getrennt sind.

4. Fahrzeug nach einem der vorangehenden Ansprüche, **dadurch gekennzeichnet, daß** eine Gleitsteuervorrichtung (172, 180, 185) vorgesehen ist, um das Bremsanforderungssignal für jede Bremse (141a, 141b) des hinteren Achsenmittels (40) unabhängig zu modulieren.

5. Fahrzeug nach einem der vorangehenden Ansprüche, **dadurch gekennzeichnet, daß** eine gemeinsame Gleitsteuervorrichtung (172) vorgesehen ist, um ein gemeinsames moduliertes Bremsanforderungssignal an jede Bremse (128, 130) des vorderen Achsenmittels (18) zuzuführen.

6. Fahrzeug nach einem der Ansprüche 1 bis 4, **dadurch gekennzeichnet, daß** eine Gleitsteuervorrichtung (172, 180, 185) vorgesehen ist, um das Bremsanforderungssignal für jede Bremse (128, 130) des vorderen Achsenmittels (18) unabhängig zu modulieren.

7. Fahrzeug nach einem der vorangehenden Ansprüche, **dadurch gekennzeichnet, daß** zumindest eine der Bremsen (128, 130, 141a, 141b) eine hydraulische Bremse ist, die mit einem hydraulischen Bremsdruck durch einen hydraulischen/pneumatischen Aktuator versorgt wird, dem ein pneumatischer Bremsdruck von einer Gleitsteuervorrichtung (172, 180, 185) zugeführt wird.

8. Fahrzeug nach einem der Ansprüche 1 bis 7, **dadurch gekennzeichnet, daß** das vordere Achsenmittel (18) von dem Fahrgestell durch eine rückwirkungsfreie Aufhängung aufgehängt ist.

9. Fahrzeug nach einem der vorangehenden Ansprüche, **dadurch gekennzeichnet, daß** das Aufhängungsmittel ein Paar von Verbindungsgliedern (42, 43, 44, 45) an jeder Seite des Fahrzeugs (10) umfaßt, wobei ein Verbindungsglied (42, 44) eines jeden Paars oberhalb des anderen (43, 45) relativ zum Boden ist, wobei die Verbindungsglieder (42, 43, 44, 45) eines jeden Paars an ihren einen Enden mit dem Fahrgestell (12) und an ihren anderen Enden mit dem oder dem jeweiligen Achsenmittel (40) verbunden sind, so daß keine wesentliche Veränderung in der vertikalen Last auf die Antriebsräder ansprechend auf Veränderungen in dem Antriebsmoment, das auf die mit dem Boden in Eingriff stehenden Räder (19a, 19b, 41a, 41b) aufgebracht wird, eintritt.

10. Fahrzeug nach einem der Ansprüche 1 bis 8, **dadurch gekennzeichnet, daß** das Aufhängungsmittel ein oberes Verbindungsglied (25, 26) aufweist, welches auf jeder Seite des Fahrzeugs (10) zwischen dem Achsenmittel (18) und dem Fahrgestell (12) vorgesehen ist, und ein einzelnes unteres Verbindungsglied (27), welches zwischen den, aber unterhalb der genannten oberen Verbindungsglieder (25, 26) angeordnet ist, und einen Panhardstab (22), der sich in Querrichtung zu den drei Verbindungsgliedern (25, 26, 27) zwischen der Achse (18) und dem Fahrgestell (12) erstreckt.

11. Fahrzeug nach einem der vorangehenden Ansprüche, **dadurch gekennzeichnet, daß** das Gerät, an das das Fahrzeug (12) zum Ziehen angepaßt ist, einen Pflug, eine Egge oder ein sonstiges landwirtschaftliches Gerät oder einen Anhänger mit Rädern umfaßt.

## Revendications

1. Véhicule (10) comprenant un châssis (12), des moyens formant essieu avant (18) et des moyens formant essieu arrière (40) et une pluralité de roues (19a, 19b, 41a, 41b), dans lequel chaque roue (19a, 19b, 41a, 41b) du véhicule (10) est pourvue d'un capteur de roue (191, 192, 193, 194), il y a un dispositif de commande (190) répondant aux signaux de vitesse de roue provenant desdits capteurs de roue (191, 192, 193, 194), pour détecter les conditions de blocage au niveau desdites roues (19a, 19b, 41a, 41b) et pour générer des instructions de contrôle de blocage, un frein de roue pour chaque roue (19a, 19b, 41a, 41b) répondant à une pression fluidique, ci-après appelée pression de freinage, fournie à celui-ci, à partir d'une alimentation en pression fluidique conformément à un signal de demande de freinage et un dispositif de contrôle de blocage (172, 180, 185) commandé par lesdites instructions de contrôle de blocage pour moduler le signal de demande de freinage pour fournir la pression de freinage, **caractérisé en ce que** le véhicule (10) comprend des moyens de remorquage (60) fixés aux moyens formant essieu arrière (40) par lesquels un outil peut être remorqué et dans lequel les moyens formant essieu arrière (40) sont suspendus au châssis (12) par des moyens formant suspension arrière (42, 43, 44, 45), les moyens formant suspension arrière comprenant une suspension non réactive.

2. Véhicule selon la revendication 1, dans lequel le dispositif de contrôle de blocage (172, 180, 185) est commandé par les instructions de contrôle de blocage pour contrôler la pression de freinage dans une pluralité de cycles, chacun comprenant une phase de réduction de pression et une phase d'augmentation de pression et un cycle peut également comprendre une phase de maintien de pression entre la phase de réduction de pression et la phase d'augmentation de pression.

3. Véhicule selon la revendication 2, dans lequel la phase d'augmentation de pression est réalisée en une pluralité d'étapes d'augmentation de pression séparées par des intervalles de pression constante.

4. Véhicule selon l'une quelconque des revendications précédentes, dans lequel un dispositif de contrôle de blocage (172, 180, 185) est prévu indépendamment pour moduler le signal de demande de freinage pour chaque frein (141a, 141b) des moyens formant essieu arrière (40).

5. Véhicule selon l'une quelconque des revendications précédentes, dans lequel un dispositif de contrôle de blocage commun (172) est prévu pour fournir un signal de demande de freinage modulé commun à chaque frein (128, 130) des moyens formant essieu avant (18).

6. Véhicule selon l'une quelconque des revendications 1 à 4, dans lequel un dispositif de contrôle de blocage (172, 180, 185) est fourni indépendamment pour moduler le signal de demande de freinage pour chaque frein (128, 130) des moyens formant essieu avant (18).

7. Véhicule selon l'une quelconque des revendications précédentes, dans lequel au moins l'un des freins (128, 130, 141a, 141b)) est un frein hydraulique qui est alimenté en pression de freinage hydraulique par un actionneur hydraulique/pneumatique qui est alimenté en pression de freinage pneumatique à partir d'un dispositif de contrôle de blocage (172, 180, 185).

8. Véhicule selon l'une quelconque des revendications 1 à 7, dans lequel les moyens formant essieu avant (18) sont suspendus au châssis par une suspension non réactive.

9. Véhicule selon l'une quelconque des revendications précédentes, dans lequel les moyens de suspension comprennent une paire de bielles (42, 43, 44, 45) sur un côté du véhicule, une bielle (42, 44) de chaque paire étant au-dessus de l'autre (43, 45) par rapport au sol, les bielles (42, 43, 44, 45) de chaque paire étant connectées à une extrémité au châssis (12) et à leur autre extrémité au ou aux moyens formant essieu (40) respectif moyennant quoi il n'y a pas de changement significatif dans le chargement vertical sur les roues motrices en réponse aux changements dans le couple d'entraînement appliqué aux roues au sol (19a, 19b, 41a, 41b).

10. Véhicule selon l'une quelconque des revendications 1 à 8, dans lequel les moyens de suspension comprennent une bielle supérieure (25, 26) prévue de chaque côté du véhicule (10), entre les moyens formant essieu (18) et le châssis (12), et une bielle inférieure unique (27) prévue entre mais sous lesdites bielles supérieures (25, 26), et une barre Panhard (22) s'étendant transversalement vers les trois bielles (25, 26, 27) entre l'essieu (18) et le châssis (12).

11. Véhicule selon l'une quelconque des revendications précédentes, dans lequel le véhicule (12) est adapté pour remorquer des outils qui comprennent une charrue, herse, ou tout autre outil agricole, ou une remorque avec des roues.
